# FASCICULE DE BREVET EUROPEEN

(11) **EP 1 258 791 B1**
(45) Date de publication et mention de la délivrance du brevet: **19.04.2006**
(21) Numéro de dépôt: 02291196.0
(22) Date de dépôt: 14.05.2002
(51) Int. Cl.: G05D 11/13, B67D 5/33

(54) **Procédé de mélange sécurisé de deux fluides et son application à la brumisation dans un silo à céréales**
Verfahren zum sicheren Mischen von zwei Fluiden und dessen Anwendung bei einem Vernebelungsverfahren in einem Getreidesilo
Method for a secure mixing of two fluids and application thereof to a misting process in a cereal silo

(30) Priorité: 15.05.2001 FR 0106382
(43) Date de publication de la demande: 20.11.2002
(73) Titulaire: EXEL INDUSTRIES, 51200 Epernay (FR)
(72) Inventeur: Ballu, Patrick, 51100 Reims (FR)
(74) Mandataire: Caron, Gérard

(56) Documents cités:
- EP-A- 0 230 860
- EP-A- 0 494 065
- WO-A-94/16554
- DE-A- 4 226 542
- DE-U- 29 919 150
- FR-A- 2 557 421
- US-A- 5 344 044
- US-A- 5 629 863
- US-A- 5 911 250
- US-A- 6 015 068

## Description

La présente invention est relative à un procédé pour le mélange sécurisé de deux fluides.

Dans de nombreuses applications, il peut être nécessaire de mélanger deux fluides dans des proportions prescrites avec la garantie que d'une part l'opération de mélange ait lieu et d'autre part que les proportions requises du mélange obtenu soient bien respectées sans erreur possible.

Une application particulière d'un tel procédé de mélange peut être trouvée dans le domaine des silos à céréales dans lesquels il convient d'éviter le danger d'explosion lorsque les produits stockés dans le silo sont manipulés, ce qui peut dégager des poussières dangereuses.

Pour éviter le dégagement de poussières pendant la manutention des céréales, il est déjà connu d'entourer le flux de céréales d'un brouillard liquide capable de rabattre les poussières, opération que les spécialistes désignent par les termes "brumisation" et "brumiser". Il est ainsi possible de réduire les risques d'explosion.

Par exemple, dans FR 2 787 428, on décrit un dispositif d'abattage de poussières contenues dans un produit en vrac, par lequel de l'eau peut être brumisée autour d'un courant de produit en vrac. Un tel dispositif d'abattage de poussières est monté de préférence en haut de chaque cellule d'un silo à céréales à la sortie du conduit amenant les céréales dans cette cellule.

Pour augmenter le pouvoir mouillant de l'eau, il est également connu de mélanger à l'eau brumisée, une faible quantité par unité de volume d'un additif réducteur de tension superficielle capable de réduire la taille des gouttelettes de l'eau et d'en améliorer ainsi le pouvoir d'étalement.

Pour garantir une réduction de la concentration en poussières en suspension (qui seraient génératrices d'explosions), capable de réduire les risques d'explosion à un niveau suffisamment faible pour protéger à coup sûr les personnes et les biens, il est très important que l'on puisse être certain, avant de manipuler les céréales, d'abord que le réducteur soit bien mélangé à l'eau à brumiser avant qu'elle parvienne au dispositif d'abattage et ensuite que le réducteur soit introduit dans l'eau avec la proportion exacte optimisant l'abattage. Ce n'est que dans ces conditions que l'on peut éviter les effets d'explosibilité en déjouant, le cas échéant, toute intervention erronée.

On connaît du document EP 0 230 860 un procédé conforme au préambule de la revendication 1 ci-annexée, permettant, grâce à une boucle de régulation, d'ajuster le débit d'un adjuvant au débit d'un fluide principal, et ainsi d'obtenir un mélange présentant une composition fixe dans le temps.

Ce procédé permet de résoudre le problème de la stabilité temporelle des proportions des composants d'un mélange, et peut être appliqué notamment au cas particulier d'un mélange formé d'eau et d'un réducteur de tension superficielle, destiné à l'abattage des poussières dans un silo à céréales.

La présente invention a pour but d'apporter un surcroît de sécurité à un tel procédé, c'est-à-dire des garanties supplémentaires sur la stabilité temporelle du mélange obtenu, non seulement dans le cas de l'application particulière esquissée ci-dessus, mais dans tous les cas où un mélange incorrect de deux fluides risque d'entraîner une condition dangereuse lors d'une opération industrielle réalisée à l'aide de ce mélange.

L'invention a donc pour objet un procédé pour préparer un mélange sécurisé de deux fluides devant être présents dans le mélange en des proportions prédéterminées, ce mélange étant destiné à être amené à un point d'utilisation, comprenant les étapes consistant à :
- amener le premier fluide à partir d'une alimentation à un point de mélange connecté audit point d'utilisation,
- amener le second fluide audit point de mélange à partir d'un réservoir,
- mesurer le débit du premier fluide en amont dudit point de mélange,
- engendrer, à partir de la valeur de débit mesurée dudit premier fluide, une valeur représentant la quantité à mélanger dudit second fluide avec ledit premier fluide de manière à respecter lesdites proportions prédéterminées,
- établir le débit dudit second fluide vers ledit point de mélange à ladite valeur de quantité,
- mesurer le débit dudit second fluide en amont dudit point de mélange,
- comparer le débit mesuré dudit second fluide s'écoulant vers le point de mélange avec ladite valeur de quantité,
- interdire le passage dudit mélange vers le point d'utilisation si, lors de ladite opération de comparaison, une discordance est décelée entre ledit débit mesuré du second fluide et ladite valeur de quantité, et
ledit réservoir étant inviolable et muni d'un support d'information codée contenant au moins une information d'identification dudit réservoir, il comprend en outre les étapes consistant :
- lors de l'installation dudit réservoir, à lire ladite information d'identification pour la mémoriser,
- au cours de l'utilisation dudit réservoir, à lire périodiquement ladite information d'identification,
- à comparer l'information d'identification mémorisée à l'information d'identification relevée périodiquement, et
- à interdire le passage dudit mélange vers ledit point d'utilisation et/ou à délivrer un message d'alarme, lorsqu'une discordance entre les deux informations comparées est constatée.

La lecture périodique de l'information d'identification figurant sur le réservoir inviolable permet de détecter immédiatement tout changement de réservoir, et d'arrêter aussitôt la circulation d'un mélange qui, du fait de ce changement, n'aurait plus les proportions requises.

Grâce à cette caractéristique, il devient possible de combattre toute anomalie dans l'approvisionnement du second fluide dont la présence et/ou la proportion dans le mélange sont déterminantes pour garantir la sécurité de l'opération industrielle pendant laquelle le mélange des deux fluides est utilisé. Ainsi, par exemple, si une fuite du second fluide se produit dans les canalisations qui l'amènent au point de mélange ou s'il y a une interruption de cet approvisionnement pour une raison quelconque, une discordance sera constatée entre les deux mesures de débit, ce dont il résulte une interdiction de poursuivre l'exécution de l'opération industrielle. Il en est de même si le mélange n'est pas fait avec les proportions prescrites des deux fluides.

Suivant d'autres caractéristiques optionnelles du procédé selon l'invention :
- ce procédé comprend également les étapes consistant à :
   - relever la quantité nominale dudit second fluide dans ledit réservoir inviolable dès son installation,
   - comptabiliser la quantité du second fluide amenée à partir dudit réservoir vers ledit point de mélange, et
   - délivrer un message d'avertissement lorsque la quantité comptabilisée dudit second fluide atteint une première valeur prédéterminée.
- ce procédé comprend également l'étape consistant à interdire le passage dudit mélange vers ledit point d'utilisation et/ou à délivrer un message d'alarme, lorsque ladite quantité comptabilisée atteint une seconde valeur prédéterminée supérieure à ladite première valeur prédéterminée,
- ledit second fluide est amené audit point de mélange par pompage intermittent ou pompage par impulsions.

L'invention a également pour objet un procédé de brumisation dans un silo de stockage de produits dont la manutention peut produire des effets d'explosibilité consistant, pendant la manutention, à entourer un flux dudit produit d'une brume liquide à l'aide d'au moins un dispositif de brumisation, remarquable en ce que ledit dispositif de brumisation est connecté audit point d'utilisation et en ce qu'il consiste à amener audit dispositif de brumisation un mélange de fluides préparé selon le procédé tel que défini dans l'une quelconque des revendications précédentes.

Suivant d'autres caractéristiques optionnelles de ce procédé :
- la manutention dudit produit dans le silo fait l'objet d'une interdiction, lorsqu'une interdiction de passage dudit mélange par ledit point d'utilisation est délivrée,
- ledit premier fluide est de l'eau et ledit second fluide est un agent réducteur de tension superficielle,
- ledit agent réducteur de tension superficielle est de type alimentaire.

La présente invention a également pour objet une installation de brumisation pour un silo de stockage de produits dont la manutention dégage des poussières présentant un risque d'explosibilité, cette installation comprenant :
- au moins un dispositif de brumisation pour créer une brumisation autour d'un flux de produit au cours de sa manutention,
- des premiers moyens de pompage pour amener audit dispositif de brumisation un mélange d'un fluide de brumisation et d'un second fluide tel qu'un fluide réducteur de tension superficielle, à travers un point de mélange,
- des seconds moyens de pompage pour amener audit point de mélange, à partir d'un réservoir, une quantité dosée dudit second fluide,
- des moyens de mesure de débit pour engendrer un signal représentatif de la quantité de fluide de brumisation,
- des moyens de commande destinés à commander lesdits seconds moyens de pompage pour qu'ils délivrent ladite quantité dosée audit point de mélange, ladite quantité étant déterminée à partir de la valeur mesurée de débit de fluide de brumisation,
- des moyens de mesure de débit situés entre lesdits seconds moyens de pompage et ledit point de mélange pour engendrer un signal de débit représentatif de la quantité de second fluide passant vers ledit point de mélange,
- lesdits moyens de commande étant également agencés pour comparer ladite quantité dosée à ladite quantité de second fluide telle que représentée par ledit signal de débit et pour interdire le fonctionnement des premiers et deuxièmes moyens de pompage si, lors de ladite opération de comparaison, les deux quantités diffèrent l'une de l'autre,
cette installation étant remarquable en ce que ledit réservoir est inviolable, et en ce qu'il est prévu un dispositif de jonction inviolable destiné à être monté sur ledit réservoir inviolable pour le soutirage dudit second fluide et, le réservoir étant muni d'un support d'information inviolable contenant notamment un numéro d'identification dudit réservoir, l'installation comprend également un lecteur dudit support d'information capable de lire périodiquement au moins ledit numéro d'identification, lesdits moyens de commande étant également agencés pour interdire l'écoulement dudit mélange vers ledit dispositif de brumisation lorsque le numéro d'identification lu ne répond pas au numéro d'identification lu précédemment.

Suivant d'autres caractéristiques optionnelles de cette installation :
- au moins lesdits premiers moyens de pompage, ledit point de mélange, lesdits seconds moyens de pompage, lesdits moyens de prélèvement inviolables, ledit réservoir, lesdits moyens de commande et/ou lesdits moyens de mesure de débit sont logés dans un local à accès protégé,
- lesdits moyens de commande comportent des moyens de télécommunication pour transmettre les données de déroulement de la brumisation à un endroit éloigné.

D'autres caractéristiques et avantages de la présente invention apparaîtront au cours de la description qui va suivre, donnée uniquement à titre d'exemple et faite en se référant aux dessins annexés sur lesquels :
- la figure 1 est un schéma général illustrant le procédé de mélange sécurisé de deux fluides selon l'invention, dans le cadre de l'application spécifique à l'abattage de poussières dans un silo à céréales, la figure montrant notamment une vue en élévation d'une unité de préparation sécurisée du mélange ;
- les figures 2 et 3 sont des vues respectivement en élévation latérale et en bout de l'unité de préparation de mélange représentée sur la figure 1 ;
- les figures 4 et 5 sont des organigrammes de deux sous-programmes de gestion du réservoir de l'un des fluides devant être mélangé à l'autre fluide ;
- la figure 6 est un organigramme montrant le déroulement d'un sous-programme destiné au contrôle du niveau dans un réservoir contenant l'un des fluides à mélanger ;
- la figure 7 est un organigramme montrant un sous-programme visant à tester l'installation du silo à céréales avant le déclenchement de la brumisation ;
- la figure 8 est un organigramme d'un sous-programme exécuté pour commander la brumisation.

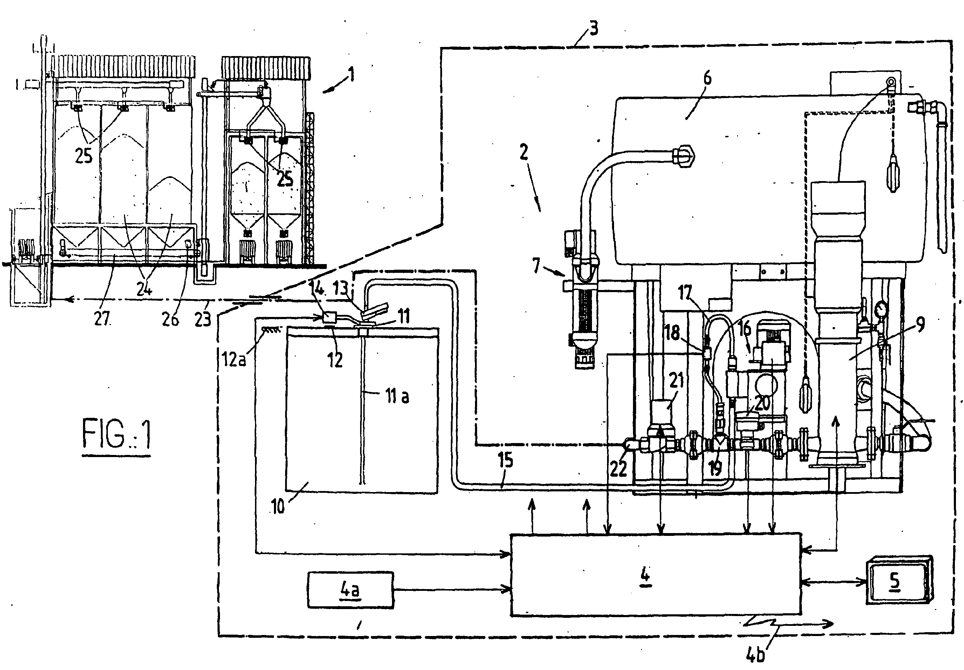

Sur les figures 1 à 3, on a représenté, à titre d'exemple d'application de l'invention, une installation de brumisation pour l'abattage de poussières dans un silo à céréales dessiné très schématiquement et désigné par la référence générale 1. L'installation comporte une unité de préparation de mélange à l'aide de laquelle sont exécutées les étapes essentielles du procédé de mélange sécurisé selon l'invention. Dans le cadre de l'application à un silo à céréales, cette unité de préparation de mélange 2 est logée de préférence dans un local ou espace à accès protégé dont les contours sont symbolisés par le cadre en tiretés 3. Ce local ou espace protégé est conçu de telle façon que l'accès non autorisé en soit interdit.

L'unité de préparation 2 comprend un automate industriel 4 couplé à un ordinateur 5. L'automate reçoit son énergie électrique d'une alimentation autonome sécurisée 4a, de préférence indépendante du secteur, qui fournit également de l'énergie à tous les autres éléments névralgiques encore à décrire de l'unité 2. L'automate 4 est de préférence l'appareil fabriqué et commercialisé par la Société OMRON sous la référence 200HG.

L'automate 4 est programmé pour exécuter les fonctions de mise en oeuvre du procédé selon l'invention et celles qui adaptent ce procédé plus particulièrement à la gestion de la brumisation dans un silo à céréales.

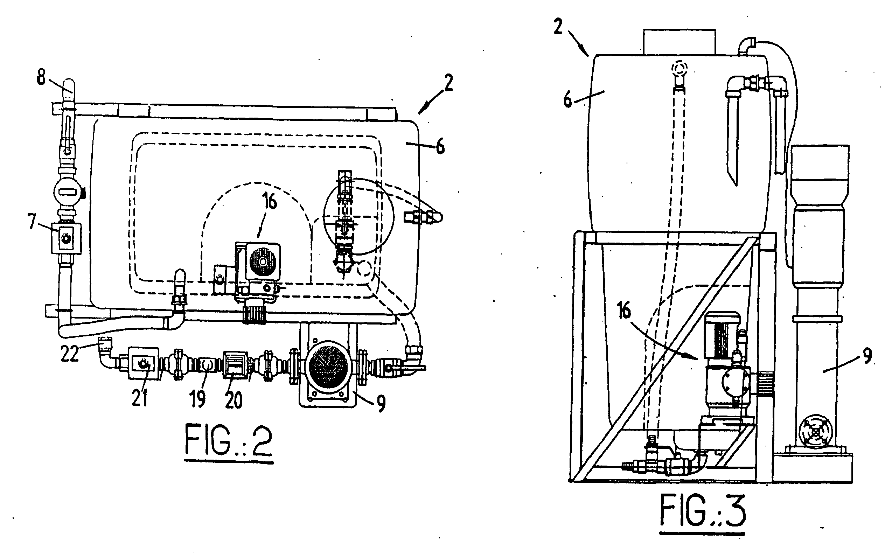

L'unité de préparation 2 comprend également un premier réservoir 6 destiné à contenir un premier fluide et connecté à travers une électrovanne 7 à une entrée d'eau 8 du premier fluide (voir figure 2). Dans l'exemple décrit, le premier fluide est de l'eau auquel cas l'entrée 8 peut être raccordée au réseau public de distribution d'eau.

Une pompe de circulation 9 est connectée au réservoir 6 pour y aspirer le premier fluide. Ainsi, en raison de la présence du réservoir 6, l'aspiration de la pompe 9 est à la pression atmosphérique sans être influencée par d'éventuelles variations de pression de la source du premier fluide.

L'unité 2 comprend également un second réservoir 10 destiné à contenir un second fluide qui doit être mélangé au fluide contenu dans le premier réservoir 6 à une proportion prédéfinie. Le réservoir 10 est conçu de telle façon qu'il soit inviolable. Au moment de sa fabrication, le réservoir 10 est rempli d'une quantité nominale d'un produit adéquat, fermé hermétiquement par un bouchon extracteur inviolable 11 et plombé. Ce conditionnement est maintenu tout au long du transfert du réservoir 10 vers son lieu d'utilisation.

Le réservoir 10 est également pourvu d'un support d'information 12 tel qu'une étiquette infalsifiable présentant un code barres ou une puce électronique. Ce support d'information 12 forme moyen d'identification et est placé près du bouchon 11. Ce bouchon est solidaire d'une canne plongeuse d'aspiration 11a. En variante, l'aspiration peut être en partie inférieure du réservoir de produit. Dans ce cas, le raccord est prévu avec un joint d'étanchéité sur alésage associé à un clapet de sécurité, le raccord pouvant alors être de type rapide classique.

Par ailleurs, le support 12 est conçu de telle façon que sa séparation d'avec le réservoir 10 provoque la destruction totale du code qui y est contenu. Ce genre de support d'information est connu des spécialistes et ne nécessite donc aucune description détaillée.

L'unité de préparation 2 comprend également une jonction de raccordement inviolable 13 au bouchon extracteur 11 du réservoir 10 pour y aspirer du fluide. Cette jonction 13 se verrouille sur le bouchon extracteur 11 par un système à gâchette de blocage connu en soi. Elle peut être branchée sur le bouchon 11 sans qu'un opérateur puisse altérer le fluide dans le réservoir 10 ou changer d'une autre façon le contenu de ce dernier, notamment en y prélevant du fluide. A la jonction inviolable 13 est fixé de façon inamovible un lecteur 14 capable de lire le code inscrit dans le moyen d'identification 12.

Le code défini dans le moyen d'identification 12 contient plusieurs informations essentielles concernant le réservoir 10 et son contenu. Ainsi, il comporte une information spécifique identifiant le réservoir 10. Il peut par ailleurs indiquer la nature du produit, la quantité nominale de produit que le réservoir 10 peut contenir (60, 200 ou 1000 kg, par exemple), la date de fabrication, ainsi que le numéro du lot de fabrication du produit. Il est ainsi possible de garantir la qualité du fluide contenu dans le réservoir durant toutes les phases intermédiaires de transport et de stockage même avant son utilisation dans l'unité 2, les informations contenues dans le moyen d'identification 12 pouvant être contrôlées à tout moment par un lecteur approprié.

La jonction inviolable 13 est raccordée à une canalisation 15 menant à une pompe de dosage 16. Celle-ci est raccordée, par l'intermédiaire d'une canalisation 17 dans laquelle est inséré un débitmètre 18, à un point de mélange 19 dans lequel débouche également le refoulement de la pompe de circulation 9 par l'intermédiaire d'un débitmètre 20. Le point de mélange 19 est conçu de telle façon que le fluide provenant du réservoir 10 puisse être injecté à une quantité précisément dosée dans la veine du fluide sous pression provenant de la pompe 9.

La pompe de dosage 16 peut être du type centrifuge, à piston(s), à piston et membrane, à engrenage etc. Elle peut être entraînée par un moteur électrique à vitesse variable. De préférence, on utilisera une pompe à piston à cylindrée réglable, ce qui facilite le dosage, la pompe pouvant alors fonctionner par intermittences, ou par impulsions, pour distribuer les très faibles doses requises de second fluide à chaque coup de piston.

Le point de mélange 19 est raccordé à une électrovanne 21 dont la sortie constitue le point d'utilisation ou la sortie 22 de l'unité de préparation 2. La sortie 22 est raccordée à un ensemble d'utilisation à travers une canalisation 23, cet ensemble étant le silo à céréales 1 dans l'exemple décrit.

De façon connue en soi, le silo 1 est divisé en cellules 24 et équipé de dispositifs d'abattage de poussières 25 branchés sur la canalisation 23 par l'intermédiaire d'électrovannes de sélection respectives (non représentées). Les dispositifs d'abattage de poussières 25 peuvent être ceux décrits dans le brevet français précité. Ils sont placés respectivement en haut des cellules 24.

L'automate 4 est connecté à tous les composants de l'ensemble 1 et de l'unité 2 oui viennent d'être décrits à l'aide de connexions qui n'ont été que partiellement représentées sur la figure 1 dans un but de clarté. Pour la même raison, ces connexions ne sont pas pourvues de repères.

Le lecteur 14 est conçu de préférence de telle façon que le code inscrit dans le moyen d'identification 12 puisse être lu périodiquement avec une fréquence relativement élevée, par exemple une lecture toutes les dix secondes. Le lecteur 14 étant connecté à l'automate 4, il peut ainsi lui fournir toutes les informations relatives à tout réservoir 10 dès que ce dernier est installé et branché.

L'automate 4 est également connecté à la pompe de dosage 16 et aux débitmètres 18 et 20 de manière à pouvoir commander et à surveiller de façon précise les débits des premier et second fluides et leur mélange.

Selon une caractéristique essentielle de l'invention, l'automate 4 comptabilise en permanence la quantité de produit extraite du réservoir 10. Il est ainsi capable de connaître à tout moment le contenu de ce dernier et de le signaler à l'utilisateur à l'aide de l'écran de l'ordinateur 5. Bien entendu, ceci concerne également l'information selon laquelle le réservoir 10 s'approche de l'épuisement du produit et doit être remplacé par un réservoir plein, comme il sera décrit en détail plus loin.

La quantité de second fluide devant être mélangée au premier fluide est déterminée de la façon suivante.

Lorsqu'ils sont en service, les dispositifs d'abattage de poussières 25 déterminent le débit du mélange devant passer dans la canalisation 23. Le débit de la pompe 9 est ajusté à cette demande par l'automate 4. Par ailleurs, le débit du fluide sous pression est mesuré par le débitmètre 20 et la valeur correspondante est prise en compte par l'automate 4 qui, à son tour, commande la pompe de dosage 16 de telle manière que les proportions prédéterminées des deux fluides dans le mélange formé au point de mélange 19 soient respectées avec précision.

Pour fixer les idées, dans l'application du procédé selon l'invention à un silo, la proportion du second fluide (qui est dans ce cas un agent tensio-actif ou réducteur de tension superficielle, de préférence de type alimentaire) est relativement faible et peut être choisie dans une gamme allant de quelques ppm à 1%, par exemple. La valeur de la proportion à mélanger qui est en principe constante dans le cas de la brumisation, peut être déterminée par introduction préalable d'une valeur souhaitée dans la mémoire de l'automate 4, cette introduction, ou éventuellement une modification de la valeur choisie précédemment, pouvant être autorisée uniquement à un opérateur habilité à cet effet.

Le débitmètre 18 mesure la quantité de fluide débitée à partir du réservoir 10 par la pompe 16 et le signal correspondant est envoyé à l'automate 4. Celui-ci compare en permanence la quantité à mélanger demandée par le débitmètre 20 à la quantité réellement introduite au point de mélange 19 et mesurée par le débitmètre 18. S'il y a discordance entre ces deux quantités, l'automate 4 interdira le fonctionnement de l'installation par arrêt des pompes 9 et 16 et fermeture des électrovannes 7 et 21. Dans le cas d'application décrit, l'automate 4 interdira alors également le fonctionnement des organes de manutention dans le silo 1.

L'information provenant du débitmètre 18 est également traitée par l'automate 4 pour totaliser la consommation réelle du second fluide, le réservoir 10 étant dûment identifié en permanence par l'automate 4 grâce au lecteur 14 qui lui fournit périodiquement l'information pertinente, en particulier le numéro d'identification du réservoir.

L'information de totalisation est utilisée pour surveiller le volume restant disponible dans le réservoir 10, notamment en vue de pouvoir procéder à son remplacement ou de fournir une alarme et provoquer un arrêt, lorsque le niveau dans le réservoir 10 atteint une valeur inférieure critique. L'automate 4 effectue périodiquement une corrélation de cette information avec le code du moyen d'identification 12 lu par le lecteur 14.

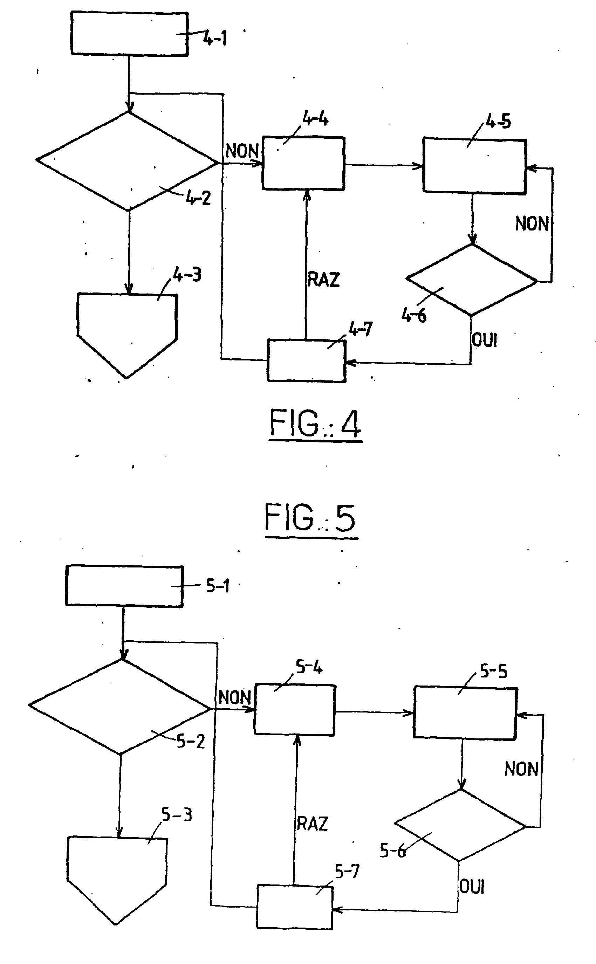

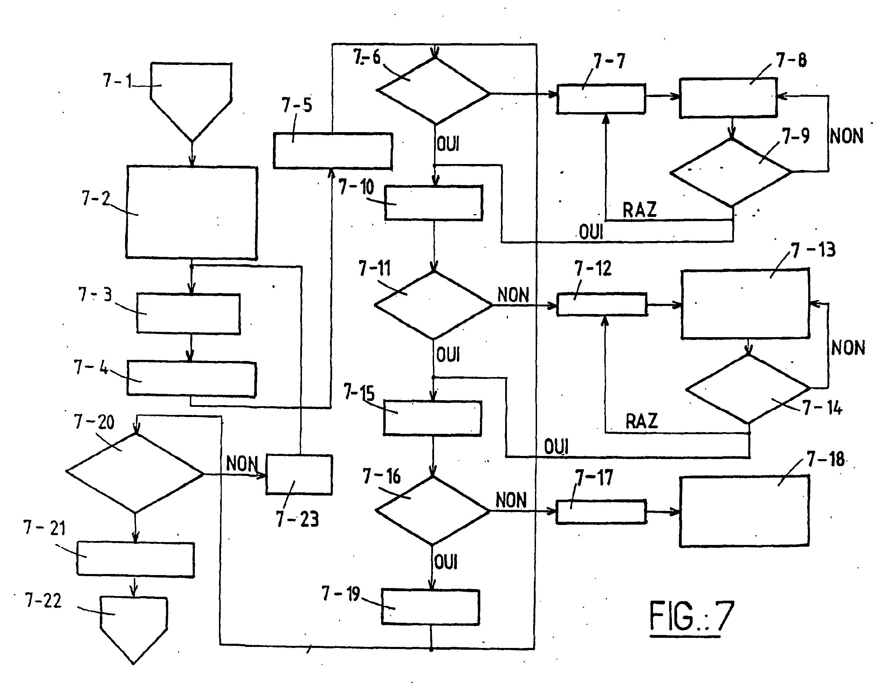

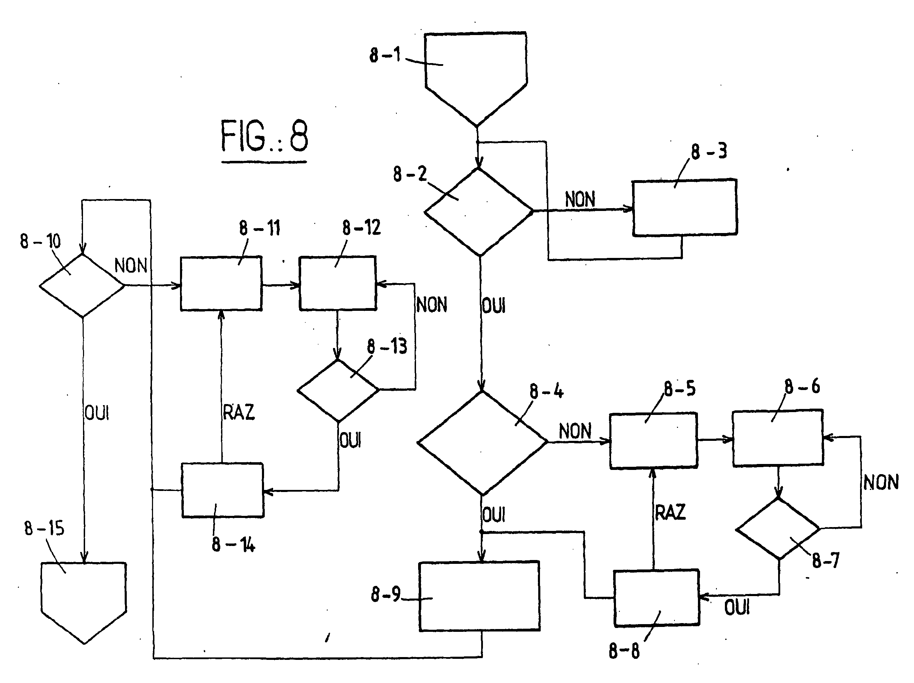

On va maintenant décrire le procédé de mélange selon l'invention en examinant les organigrammes des figures 4 à 6, puis ceux des figures 7 et 8 qui portent plus spécifiquement sur l'application de ce procédé à la brumisation dans le silo à céréales 1.

Avant d'examiner ces organigrammes, il est utile de noter que, selon des processus connus en soi, l'unité 2 peut être placée dans plusieurs modes de fonctionnement non décrits en détail qui sont classés selon une hiérarchie stricte d'accès. Dans l'ordre hiérarchique, ces modes sont les suivants: marche pour le réglage par le concepteur, marche pour la maintenance par l'exploitant (dans l'exemple spécifique le gestionnaire du silo 1) et la marche en mode automatique. Le choix de chacun de ces modes ne peut intervenir qu'après introduction et acquittement d'un mot de passe reconnu par l'automate 4 et l'ordinateur 5, que doit connaître chacun des acteurs intervenant respectivement pour les trois modes de fonctionnement mentionnés et ayant accès au local 3.

Par ailleurs, à la mise en marche de l'unité 2, l'automate 4 procède automatiquement à un certain nombre de vérifications du bon fonctionnement des organes névralgiques de l'unité, sur le chemin choisi, c'est à dire l'ensemble du circuit 23 et du ou des organes 25, correspondant aux points de manutention sélectionnés. Il ne donne alors une autorisation d'utilisation de celle-ci que si tous les contrôles ont reçu une réponse satisfaisante.

L'organigramme de la figure 4 illustre l'opération de remplacement d'un réservoir vide 10 par un réservoir plein. Cette opération ne peut être déclenchée que lorsque l'unité 2 est placée dans le mode de maintenance par l'exploitant (bloc 4-1). Pour que le remplacement d'un réservoir 10 puisse avoir lieu, l'automate 4 vérifie, au cours d'un test 4-2, si la jonction 13 a été ôtée du réservoir 10 en place. Ce contrôle est effectué pendant que le lecteur 14 est en fonctionnement. Celui-ci faisant un contrôle de code périodiquement comme décrit ci-dessus, il importe que pendant que la jonction 13 est déposée, le lecteur 14 puisse continuer à transmettre à l'automate 4 un message de code satisfaisant. Par conséquent, il est prévu près de l'emplacement du réservoir 10, un endroit où la jonction 13 peut être déposée alors que le lecteur 14 est pointé sur un moyen d'identification de remplacement 12a (représenté schématiquement sur la figure 1), prévu à proximité de cet endroit par exemple sur une étagère prévue près du réservoir 10. Le test 4-2 consiste précisément à vérifier le code de remplacement alors lu. Si ce test est satisfaisant, l'autorisation de changer le réservoir est donnée en 4-3. Dans le cas contraire, le sous-programme passe sur une opération d'introduction en mémoire d'une information de défaut (bloc 4-4) et à l'affichage d'un message d'erreur sur l'écran de l'ordinateur 5 (bloc 4-5). Le sous-programme passe alors dans une boucle d'attente, exécutant un test 4-6 vérifiant si la dépose de la jonction 13 a correctement été effectuée. Tant que cela n'est pas le cas, l'affichage (bloc 4-5) reste actif. Dans le cas contraire, le message d'erreur est effacé (bloc 4-7), la mémoire de défaut est remise à zéro et le test du bloc 4-2 est de nouveau effectué.

La figure 5 représente l'organigramme de l'opération de contrôle des caractéristiques du réservoir 10 mis en place et du contenu de celui-ci. Cette opération est effectuée, lorsque l'ensemble fonctionne en mode automatique (bloc 5-1). Au cours de l'opération 5-2, ces caractéristiques sont soit vérifiées soit introduites dans l'automate 4 pour y être utilisées au cours des opérations ultérieures du programme. Par exemple, la quantité nominale de produit dans le réservoir 10 est placée dans la mémoire de l'automate 4. L'opération 5-2 ayant été effectuée avec succès, le programme passe à l'opération 5-3 pour donner une autorisation d'exécution des opérations de mélange des deux fluides et de l'utilisation de ce mélange.

Si l'opération 5-2 ne peut aboutir, le programme passe dans une boucle d'erreur qui est identique à celle déjà décrite à propos de la figure 4. Les blocs de la figure 5 symbolisant des étapes de procédé analogues sont donc identifiés par des références équivalentes 5-4 à 5-7.

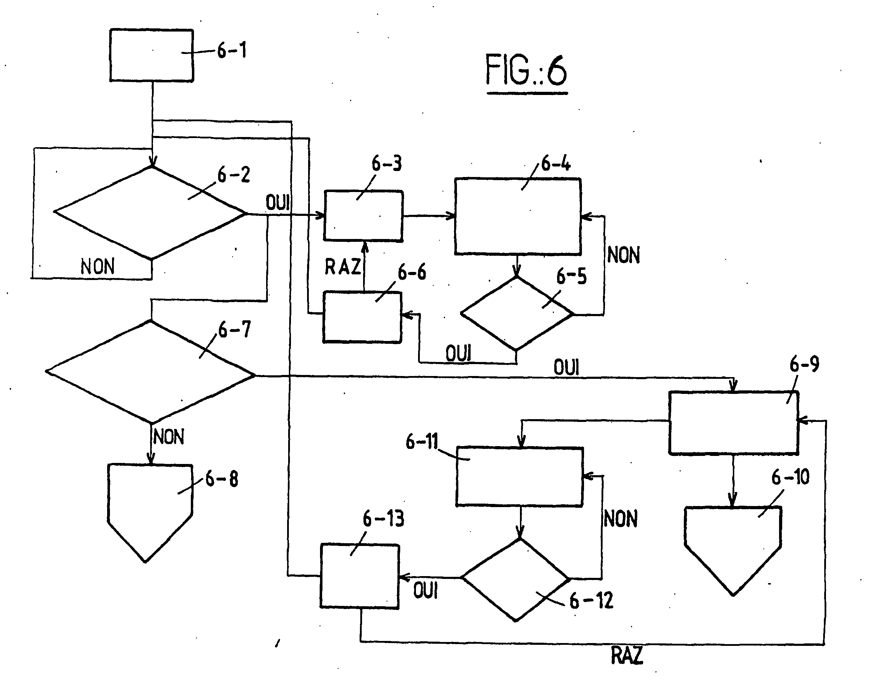

La figure 6 illustre les opérations de gestion du réservoir de fluide 10. Cette procédure est déclenchée en mode automatique (bloc 6-1). Le bloc 6-2 illustre l'opération de contrôle de la consommation du fluide puisé dans le réservoir 10.

L'automate 4 reçoit en permanence un signal de débit du débitmètre 18. Lorsqu'un nouveau réservoir 10 est mis en place, le lecteur 14 informe l'automate 4 de la quantité nominale de produit qu'il contient, cette valeur étant lue sur le moyen d'identification 12. La valeur correspondante est mise en mémoire dans un registre de comptage de l'ordinateur 4 et la consommation en additif mesurée par le débitmètre 18 est dynamiquement retranchée de cette valeur pendant que la pompe 16 y puise du produit.

Le test effectué lors de l'opération 6-2 consiste notamment à surveiller une valeur prédéterminée du contenu du registre de comptage, cette valeur représentant un niveau relativement bas du produit restant dans le réservoir 10, étant entendu que la valeur courante contenue dans le registre représente le niveau instantané dans ce réservoir. Lorsque cette valeur prédéterminée est atteinte, le programme entre dans une boucle d'erreur qui commande les mêmes opérations que celles déjà décrites à propos des figures 4 et 5, un message de pré-alerte apparaissant sur l'écran de l'ordinateur 5 consistant en un avertissement que le réservoir 10 va bientôt devoir être remplacé (bloc 6-3 à 6-6). Le test du bloc 6-2 est effectué tant que la valeur prédéterminée d'avertissement n'est pas atteinte dans le registre de comptage.

Si celle-ci est atteinte, outre la production du message de pré-alerte assurée par les blocs 6-3 à 6-6, le programme déclenche également un test (bloc 6-7) pour vérifier si la valeur déposée dans le registre de décomptage atteint une seconde valeur prédéterminée inférieure à la première et représentant un niveau du produit dans le réservoir proche du niveau zéro. Tant que cette valeur n'est pas atteinte, l'unité 2 continue à recevoir une autorisation de fonctionner de la part du sous-programme de la figure 6 (bloc 6-8).

Si la valeur inférieure est atteinte, l'information correspondante est mise en mémoire (bloc 6-9) dans l'automate 4 et l'arrêt de l'unité 2 est commandé (bloc 6-10). L'opération 6-11 consiste à afficher un message sur l'écran de l'ordinateur 5 précisant qu'il n'y a plus de réducteur de tension. Ce message est maintenu tant que l'exploitant n'a pas acquitté ce message (c'est à dire tant qu'il n'a pas encore mis en place un nouveau réservoir 10), ce qui est vérifié au cours du test de bloc 6-12. S'il y a acquittement après remplacement du réservoir, le message est effacé et l'information correspondante qui était inscrite dans la mémoire de l'automate 4 est remise à zéro (bloc 6-13).

La figure 7 illustre les opérations qu'exécute le programme dans le cadre spécifique de l'utilisation d'un mélange de fluides pour la brumisation dans le silo à céréales de la figure 1, le premier fluide étant un réducteur de tension superficielle, et le second fluide étant de l'eau.

L'autorisation de marche de l'ensemble ayant été délivrée (bloc 7-1), une demande de lancement d'une brumisation est formulée (bloc 7-2). Cette demande de lancement déclenche un test du fonctionnement de ceux des dispositifs d'abattage de poussières 25 que l'exploitant veut mettre en oeuvre pendant la brumisation. L'opération du bloc 7-2 consiste à identifier le choix de l'exploitant à sélectionner les dispositifs d'abattage choisis et à examiner s'il y a concordance entre les deux opérations. L'ensemble des canalisations des circuits menant aux dispositifs de brumisation sélectionnés est alors mis en eau (bloc 7-3), le programme parcourant par itérations successives une boucle de contrôle de chacune des électrovannes (non représentées) commandant l'admission du mélange aux dispositifs d'abattage respectifs.

Au cours de l'opération 7-4, la première électrovanne est ouverte, puis un contrôle de débit est effectué pour déterminer si les canalisations menant au dispositif de brumisation en question présentent ou non une fuite (bloc 7-5). L'opération du bloc 7-6 consiste à vérifier l'ouverture de l'électrovanne générale 21. S'il s'avère qu'elle ne s'ouvre pas correctement, une boucle d'erreur est parcourue, le défaut étant mémorisé en 7-7 et affiché en 7-8. Le test 7-9 examine, si l'exploitant a effectué le contrôle de l'électrovanne 21. Tant que le test fournit une réponse négative, le programme reste en attente et l'affichage est maintenu. S'il y a acquittement, la mémoire de défaut est remise à zéro et le programme passe à l'opération du bloc 7-10, qui consiste à mettre en marche la pompe 9. L'opération du bloc 7-11 consiste à vérifier le bon fonctionnement de la pompe 9. Si une anomalie est constatée, le programme passe dans une boucle d'erreur consistant à effectuer les opérations 7-12, 7-13 et 7-14 qui sont analogues respectivement aux opérations 7-7, 7-8 et 7-9, mais appliquées à un défaut éventuel de la pompe 9.

Si la pompe 9 a correctement démarré, un contrôle est effectué dans le circuit principal sur lequel débite la pompe 9 pour en vérifier la pression et le débit (bloc 7-15). Ensuite par l'opération 7-16, on vérifie la stabilité du débit de la pompe 9. S'il y a instabilité, une information d'alerte est introduite dans une mémoire d'alerte de l'automate 4 (bloc 7-17) et un message d'alerte est affiché en 7-18 pour inviter l'exploitant à vérifier la première électrovanne. Si au contraire le débit s'est correctement stabilisé, la première électrovanne est fermée, la seconde électrovanne est ouverte (bloc 7-19) et une nouvelle itération de vérification en l'occurrence de la seconde électrovanne est entamée par rebouclage sur l'opération du bloc 7-6.

Le test du bloc 7-20 consiste à vérifier si toutes les électrovannes ont été vérifiées sans provoquer de message d'alerte. Si c'est le cas, un message de bon fonctionnement est affiché sur l'écran de l'ordinateur 5, la pompe 9 est arrêtée et l'électrovanne générale 21 est fermée (bloc 7-21). Puis l'autorisation de brumisation est délivrée (bloc 7-22).

Si au contraire, il reste encore une ou plusieurs électrovannes à vérifier et un message d'alerte est délivré, le programme passe à l'opération du bloc 7-23 qui consiste à fermer l'électrovanne générale 21 et à arrêter la pompe 9 (bloc 7-23). Le programme parcourt alors un nouveau cycle de vérification en se rebouclant sur l'opération du bloc 7-3.

La figure 8 illustre les opérations qui suivent celles qui viennent d'être décrites à propos de la figure 7. L'autorisation de démarrage du cycle de brumisation étant donnée (bloc 8-1 et bloc 7-22), il est d'abord vérifié par le test du bloc 8-2, si une autorisation de démarrage de la manutention des céréales est délivrée. Si ce n'est pas le cas, l'unité 2 attend l'autorisation et un message correspondant est affiché sur l'écran de l'ordinateur 5 (bloc 8-3). Le test est mis en oeuvre tant que l'autorisation n'est pas délivrée.

Dès qu'elle l'est, on vérifie si l'ordre de déclenchement de la manutention des céréales est présent (bloc 8-4). Si ce n'est pas le cas, le programme passe dans une boucle d'erreur, analogue à celle déjà décrite à propos des figures 4 et 5 (blocs 8-5 à 8-8).

Si l'ordre de déclenchement est présent, le programme attend un signal d'un capteur 26 (figure 1) détectant la présence de céréales sur un tapis sans fin 27 (bloc 8-9).

Cette présence est vérifiée par l'opération de test du bloc 8-10. Si le signal de présence n'est pas engendré malgré l'ordre de démarrage de la manutention, le programme entre dans une boucle d'erreur analogue à la boucle des opérations des blocs 8-5 à 8-8 (bloc 8-11 à 8-14). Si au contraire, il est constaté que des céréales sont présentes sur le tapis 27, la brumisation peut être lancée (bloc 8-15).

Il est à noter que toutes les boucles d'erreur décrites ci-dessus peuvent impliquer une opération d'alarme sonore, lumineuse ou analogue pour dûment avertir l'exploitant qu'une anomalie s'est produite.

Par ailleurs, il est avantageux de prévoir sur l'automate 4 une fonction de transmission de tout l'historique du fonctionnement de l'unité 2 par exemple par l'intermédiaire d'une liaison téléphonique ou analogue, moyennant quoi l'installation pourra être surveillée et toutes les données pourront être disponibles à distance. Cette liaison de transmission vers l'extérieur est symbolisée par la connexion 4b sur la figure 1.

## Revendications

1. Procédé pour préparer un mélange sécurisé de deux fluides devant être présents dans le mélange en des proportions prédéterminées, ce mélange étant destiné à être amené à un point d'utilisation (22), comprenant les étapes consistant à :
- amener le premier fluide à partir d'une alimentation (6 à 9) à un point de mélange (19) connecté audit point d'utilisation (22),
- amener le second fluide audit point de mélange (19) à partir d'un réservoir (10),
- mesurer le débit du premier fluide en amont dudit point de mélange (19),
- engendrer, à partir de la valeur de débit mesurée dudit premier fluide, une valeur représentant la quantité à mélanger dudit second fluide avec ledit premier fluide de manière à respecter lesdites proportions prédéterminées,
- établir le débit dudit second fluide vers ledit point de mélange (19) à ladite valeur de quantité,
- mesurer le débit dudit second fluide en amont dudit point de mélange (19),
- comparer le débit mesuré dudit second fluide s'écoulant vers le point de mélange (19) avec ladite valeur de quantité,
ce procédé étant **caractérisé en ce qu'**il comprend une étape consistant à interdire le passage dudit mélange vers ledit point d'utilisation si, lors de ladite opération de comparaison, une discordance est décelée entre ledit débit mesuré du second fluide et ladite valeur de quantité, et ledit réservoir (10) étant inviolable et muni d'un support d'information codée (12) contenant au moins une information d'identification dudit réservoir, il comprend en outre les étapes consistant :
- lors de l'installation dudit réservoir (10), à lire ladite information d'identification pour la mémoriser,
- au cours de l'utilisation dudit réservoir (10), à lire périodiquement ladite information d'identification,
- à comparer l'information d'identification mémorisée à l'information d'identification relevée périodiquement, et
- à interdire le passage dudit mélange vers ledit point d'utilisation (22) et/ou à délivrer un message d'alarme, lorsqu'une discordance entre les deux informations comparées est constatée.

2. Procédé suivant la revendication 1, **caractérisé en ce qu'**il comprend également les étapes consistant à :
- relever la quantité nominale dudit second fluide dans ledit réservoir inviolable (10) dès son installation,
- comptabiliser la quantité du second fluide amenée à partir dudit réservoir (10) vers ledit point de mélange (19), et
- délivrer un message d'avertissement lorsque la quantité comptabilisée dudit second fluide atteint une première valeur prédéterminée.

3. Procédé suivant la revendication 2, **caractérisé en ce qu'**il consiste à interdire le passage dudit mélange vers ledit point d'utilisation (22) et/ou à délivrer un message d'alarme, lorsque ladite quantité comptabilisée atteint une seconde valeur prédéterminée supérieure à ladite première valeur prédéterminée.

4. Procédé suivant l'une quelconque des revendications 1 à 3, **caractérisé en ce que** ledit second fluide est amené audit point de mélange (19) par pompage intermittent ou pompage par impulsions.

5. Procédé de brumisation dans un silo de stockage (1) de produits dont la manutention peut produire des effets d'explosibilité, consistant pendant la manutention, à entourer un flux dudit produit d'une brume liquide à l'aide d'au moins un dispositif de brumisation (25), **caractérisé** à ce que ledit dispositif de brumisation (25) est connecté audit point d'utilisation (22) et en ce qu'il consiste à amener audit dispositif de brumisation un mélange de fluides préparé selon le procédé tel que défini dans l'une quelconque des revendications précédentes.

6. Procédé suivant la revendication 5, **caractérisé en ce que** la manutention dudit produit dans le silo (1) fait l'objet d'une interdiction, lorsqu'une interdiction de passage dudit mélange par ledit point d'utilisation (22) est délivrée.

7. Procédé suivant l'une quelconque des revendications 5 et 6, **caractérisé en ce que** ledit premier fluide est de l'eau et ledit second fluide est un agent réducteur de tension superficielle.

8. Procédé suivant la revendication 7, **caractérisé en ce que** ledit agent réducteur de tension superficielle est de type alimentaire.

9. Installation de brumisation pour un silo de stockage (1) de produits dont la manutention dégage des poussières présentant un risque d'explosibilité, cette installation comprenant :
- au moins un dispositif de brumisation (25) pour créer une brumisation autour d'un flux de produit au cours de sa manutention,
- des premiers moyens de pompage (9) pour amener audit dispositif de brumisation (25) un mélange d'un fluide de brumisation et d'un second fluide tel qu'un fluide réducteur de tension superficielle, à travers un point de mélange (19),
- des seconds moyens de pompage (16) pour amener audit point de mélange (19), à partir d'un réservoir (10), une quantité dosée dudit second fluide,
- des moyens de mesure de débit (20) pour engendrer un signal représentatif de la quantité de fluide de brumisation,
- des moyens de commande (4) destinés à commander lesdits seconds moyens de pompage (16) pour qu'ils délivrent ladite quantité dosée audit point de mélange (19), ladite quantité étant déterminée à partir de la valeur mesurée de débit de fluide de brumisation,
- des moyens de mesure de débit (18) situés entre lesdits seconds moyens de pompage (16) et ledit point de mélange (19) pour engendrer un signal de débit représentatif de la quantité de second fluide passant vers ledit point de mélange,
- lesdits moyens de commande (4) étant également agencés pour comparer ladite quantité dosée à ladite quantité de second fluide telle que représentée par ledit signal de débit et pour interdire le fonctionnement des premiers et deuxièmes moyens de pompage si, lors de ladite opération de comparaison, les deux quantités diffèrent l'une de l'autre,
cette installation étant **caractérisée en ce que** ledit réservoir (10) est inviolable, et **en ce qu'**il est prévu un dispositif de jonction inviolable (13) destiné à être monté sur ledit réservoir inviolable (10) pour le soutirage dudit second fluide et, le réservoir (10) étant muni d'un support d'information inviolable (12) contenant notamment un numéro d'identification dudit réservoir, l'installation comprend également un lecteur (14) dudit support d'information capable de lire périodiquement au moins ledit numéro d'identification, lesdits moyens de commande (4) étant également agencés pour interdire l'écoulement dudit mélange vers ledit dispositif de brumisation (25) lorsque le numéro d'identification lu ne répond pas au numéro d'identification lu précédemment.

10. Installation suivant la revendication 9, **caractérisée en ce qu'**au moins lesdits premiers moyens de pompage (9), ledit point de mélange (19), lesdits seconds moyens de pompage (16), lesdits moyens de prélèvement inviolables (13), ledit réservoir (10), lesdits moyens de commande (4) et/ou lesdits moyens de mesure de débit (18) sont logés dans un local (3) à accès protégé.

11. Installation suivant l'une quelconque des revendications 9 ou 10, **caractérisée en ce que** lesdits moyens de commande (4) comportent des moyens de télécommunication (4b) pour transmettre les données de déroulement de la brumisation à un endroit éloigné.

## Patentansprüche

1. Verfahren zum Herstellen eines sicheren Gemischs aus zwei Fluiden, die im Gemisch in vorbestimmten Anteilen vorliegen müssen, wobei dieses Gemisch zu einem Anwendungspunkt (22) befördert werden soll, das die folgenden Schritte umfasst:
- Befördem des ersten Fluids von einer Zuführung (6 bis 9) bis zu einem Mischpunkt (19), der mit dem Anwendungspunkt (22) verbunden ist,
- Befördern des zweiten Fluids von einem Behälter (10) aus zu diesem Mischpunkt (19),
- Messen des Durchflusses des ersten Fluids oberhalb des Mischpunkts (19),
- Erzeugen eines Werts aus dem Wert des gemessenen Durchflusses des ersten Fluids, der die zu mischende Menge des zweiten Fluids mit dem ersten Fluid wiedergibt, sodass die vorgegebenen Anteile beachtet werden,
- Festlegen des Durchflusses des zweiten Fluids zum Mischpunkt (19) bei dem Wert der Menge,
- Messen des Durchflusses des zweiten Fluids oberhalb des Mischpunkts (19),
- Vergleichen des gemessenen Durchflusses des zweiten Fluids, das zum Mischpunkt (19) fließt, mit dem Wert der Menge,
wobei dieses Verfahren **dadurch gekennzeichnet ist, dass** es einen Schritt umfasst, der darin besteht, den Durchlauf des Gemischs zum Anwendungspunkt zu verhindern, wenn bei dem Vergleichsvorgang zwischen dem gemessenen Durchfluss des zweiten Fluids und dem Wert der Menge eine Nichtübereinstimmung festgestellt wird, und, da der Behälter (10) manipulationssicher ist und mit einem Datenträger mit verschlüsselten Daten (12) ausgestattet ist, der zumindest eine Kennzeichnungsangabe des Behälters enthält, umfasst es außerdem die folgenden Schritte:
- Lesen der Kennzeichnungsangabe bei der Aufstellung des Behälters (10), um sie zu speichern,
- Lesen der Kennzeichnungsangabe in regelmäßigen Abständen während der Verwendung des Behälters (10),
- Vergleichen der gespeicherten Kennzeichnungsangabe mit der Kennzeichnungsangabe, die in regelmäßigen Abständen abgelesen wird, und
- Verhindern des Durchlaufs des Gemischs zum Anwendungspunkt (22) und/oder Abgeben einer Alarmmeldung, wenn zwischen den beiden verglichenen Informationen eine Nichtübereinstimmung festgestellt wird.

2. Verfahren nach Anspruch 1, **dadurch gekennzeichnet, dass** es auch die folgenden Schritte umfasst:
- Feststellen der Sollmenge des zweiten Fluids im manipulationssicheren Behälter (10) bereits bei seiner Aufstellung,
- Erfassen der Menge des zweiten Fluids, die vom Behälter (10) aus zum Mischpunkt (19) befördert wird, und
- Abgeben einer Warnmeldung, wenn die erfasste Menge des zweiten Fluids einen ersten vorgegebenen Wert erreicht.

3. Verfahren nach Anspruch 2, **dadurch gekennzeichnet, dass** es darin besteht, den Durchlauf des Gemischs zum Anwendungspunkt (22) zu verhindern und/oder eine Alarmmeldung abzugeben, wenn die erfasste Menge einen zweiten vorgegebenen Wert erreicht, der höher als der erste vorgegebene Wert ist.

4. Verfahren nach einem der Ansprüche 1 bis 3, **dadurch gekennzeichnet, dass** das zweite Fluid durch diskontinuierliches Pumpen oder durch impulsweises Pumpen zum Mischpunkt (19) befördert wird.

5. Vernebelungsverfahren in einem Silo (1) zum Lagern von Erzeugnissen, deren Beförderung eine explosible Wirkung hervorrufen kann, das darin besteht, während der Beförderung einen Strom dieses Erzeugnisses mithilfe zumindest einer Vernebelungsvorrichtung (25) mit einem Flüssigkeitsnebel zu umgeben, **dadurch gekennzeichnet, dass** die Vernebelungsvorrichtung (25) mit dem Anwendungspunkt (22) verbunden ist und es darin besteht, ein Fluidgemisch zur Vernebelungsvorrichtung zu befördern, das nach dem Verfahren hergestellt ist, wie es in einem der vorhergehenden Ansprüche definiert ist.

6. Verfahren nach Anspruch 5, **dadurch gekennzeichnet, dass** die Beförderung des Erzeugnisses in dem Silo (1) verhindert wird, wenn eine Sperrung des Durchlaufs des Gemischs durch den Anwendungspunkt (22) ausgegeben wird.

7. Verfahren nach einem der Ansprüche 5 und 6, **dadurch gekennzeichnet, dass** das erste Fluid Wasser und das zweite Fluid ein Mittel zur Herabsetzung der Oberflächenspannung ist.

8. Verfahren nach Anspruch 7, **dadurch gekennzeichnet, dass** das Mittel zur Herabsetzung der Oberflächenspannung ein Nahrungsmittel ist.

9. Vernebelungsanlage für ein Silo (1) zum Lagern von Erzeugnissen, bei deren Beförderung Staub freigesetzt wird, der eine Explosionsgefahr darstellt, wobei diese Anlage Folgendes umfasst:
- zumindest eine Vernebelungsvorrichtung (25) zum Erzeugen einer Vernebelung um einen Strom des Erzeugnisses während dessen Beförderung,
- erste Pumpmittel (9), um ein Gemisch aus einem Vernebelungsfluid und einem zweiten Fluid wie einem Fluid zur Herabsetzung der Oberflächenspannung durch einen Mischpunkt hindurch (19) zur Vernebelungsvorrichtung (25) zu befördern,
- zweite Pumpmittel (16), um von einem Behälter (10) aus eine dosierte Menge des zweiten Fluids zum Mischpunkt (19) zu befördern,
- Mittel zum Messen des Durchflusses (20) zum Erzeugen eines Signals, das der Menge des Vernebelungsfluids entspricht,
- Steuermittel (4), die die zweiten Pumpmittel (16) steuern sollen, damit sie an den Mischpunkt (19) die dosierte Menge liefern, wobei die Menge aus dem Messwert des Durchflusses des Vernebelungsfluids ermittelt wird,
- Mittel zum Messen des Durchflusses (18), die zwischen den zweiten Pumpmitteln (16) und dem Mischpunkt (19) liegen, zum Erzeugen eines Durchflusssignals, das der Menge des zweiten Fluids entspricht, das zum Mischpunkt strömt,
- wobei die Steuermittel (4) ebenfalls derart aufgebaut sind, dass sie die dosierte Menge mit der Menge des zweiten Fluids vergleichen, wie sie durch das Durchflusssignal wiedergegeben ist, und dass sie den Betrieb der ersten und zweiten Pumpmittel verhindern, wenn die beiden Mengen während des Vergleichsvorgangs voneinander abweichen,
wobei diese Anlage **dadurch gekennzeichnet ist, dass** der Behälter (10) manipulationssicher ist und eine manipulationssichere Anschlussvorrichtung (13) vorgesehen ist, die zur Entnahme des zweiten Fluids auf dem manipulationssicheren Behälter (10) angebracht werden soll, und, da der Behälter (10) mit einem manipulationssicheren Datenträger (12) ausgestattet ist, der insbesondere eine Kennnummer des Behälters enthält, umfasst die Anlage ebenfalls ein Lesegerät (14) für den Datenträger, das in der Lage ist, in regelmäßigen Abständen zumindest die Kennnummer abzulesen, wobei die Steuermittel (4) ebenfalls so aufgebaut sind, dass sie die Strömung des Gemischs zur Vernebelungsvorrichtung (25) verhindern, wenn die abgelesene Kennummer nicht der Kennnummer entspricht, die zuvor abgelesen wurde.

10. Anlage nach Anspruch 9, **dadurch gekennzeichnet, dass** sich zumindest die ersten Pumpmittel (9), der Mischpunkt (19), die zweiten Pumpmittel (16), die manipulationssicheren Entnahmemittel (13), der Behälter (10), die Steuermittel (4) und/oder die Mittel zum Messen des Durchflusses (18) in einem Raum (3) mit gesichertem Zugang befinden.

11. Anlage nach einem der Ansprüche 9 oder 10, **dadurch gekennzeichnet, dass** die Steuermittel (4) Fernmeldemittel (4b) enthalten, damit die Daten über den Ablauf der Vernebelung an einen entfernten Ort übertragen werden können.

## Claims

1. Method for preparing a safe mixture of two fluids that have to be present in the mixture in predetermined proportions, this mixture being intended to be brought to a point of use (22), the method including the steps consisting in:
- feeding the first fluid from a supply (6 to 9) to a mixing point (19) connected to said point of use (22),
- feeding the second fluid to said mixing point (19) from a tank (10),
- measuring the flow rate of the first fluid upstream of said mixing point (19),
- generating from the measured value of the flow rate of said first fluid a value representing the quantity of said second fluid to be mixed with said first fluid in such a manner as to comply with said predetermined proportions,
- establishing the flow of said second fluid toward said mixing point (19) at said quantity value,
- measuring the flow rate of said second fluid upstream of said mixing point (19),
- comparing the measured flow rate of said second fluid flowing toward the mixing point (19) with said quantity value,
this method being **characterised in that** it includes a step consisting in prohibiting the passage of said mixture toward said point of use if, during said comparison operation, a mismatch is detected between said measured flow rate of the second fluid and said quantity value, and said tank (10) being inviolable and provided with a coded information medium (12) containing at least information identifying said tank, and further including the steps consisting in:
- during installation of said tank (10), reading said identification information in order to store it,
- during use of said tank (10), periodically reading said identification information,
- comparing the stored identification information to the identification information periodically read, and
- prohibiting the passage of said mixture to said point of use (22) and/or issuing an alarm message if a mismatch is found between the information compared.

2. Method according to Claim 1, **characterised in that** it further includes the steps consisting in:
- noting the nominal quantity of said second fluid in said inviolable tank (10) as soon as it is installed,
- totalling the quantity of the second fluid brought from said tank (10) to said mixing point (19), and
- issuing a warning message if the totalled quantity of said second fluid reaches a first predetermined value.

3. Method according to Claim 2, **characterised in that** it consists in prohibiting the passage of said mixture to said point of use (22) and/or issuing an alarm message if said totalled quantity reaches a second predetermined value higher than said first predetermined value.

4. Method according to any one of Claims 1 to 3, **characterised in that** said second fluid is brought to said mixing point (19) by intermittent pumping or pulsed pumping.

5. Method of misting in a storage silo (1) of products the handling whereof can produce explosive effects, consisting, during handling, in surrounding a flow of said product with a liquid mist with the aid of at least one misting device (25), **characterised in that** said misting device (25) is connected to said point of use (22) and the method consists in feeding to said misting device a mixture of fluids prepared by the method as defined in any one of the preceding Claims.

6. Method according to Claim 5, **characterised in that** handling of said product in the silo (1) is prohibited if a prohibition of the passage of said mixture through said point of use (22) is issued.

7. Method according to either Claim 5 or Claim 6, **characterised in that** said first fluid is water and said second fluid is a surface tension reducing agent.

8. Method according to Claim 7, **characterised in that** said surface tension reducing agent is of foodstuffs type.

9. Misting installation for a storage silo (1) of products the handling whereof generates dust representing an explosion risk, this installation including:
- at least one misting device (25) for creating a mist around a flow of product during handling thereof,
- first pumping means (9) for feeding a mixture of a misting fluid and a second fluid such as a surface tension reducing fluid to said misting device (25) via a mixing point (19),
- second pumping means (16) for feeding to said mixing point (19), from a tank (10), a metered quantity of said second fluid,
- flow rate measuring means (20) for generating a signal representing the quantity of misting fluid,
- control means (4) adapted to control said second pumping means (16) so that they deliver said metered quantity to said mixing point (19), said quantity being determined from the measured value of the misting fluid flow rate,
- flow rate measuring means (18) situated between said second pumping means (16) and said mixing point (19) to generate a flow rate signal representing the quantity of second fluid passing to said mixing point,
- said control means (4) being also adapted to compare said metered quantity to said quantity of second fluid as represented by said flow rate signal and to prohibit the operation of the first and second pumping means if, during said comparison operation, the two quantities are different from each other,
this installation being **characterised in that** said tank (10) is inviolable and there is provided an inviolable junction device (13) adapted to be mounted on said inviolable tank (10) to draw off said second fluid and, the tank (10) being provided with an inviolable information medium (12) containing in particular an identification number of said tank, the installation further includes a reader (14) of said information medium capable of periodically reading at least said identification number, said control means (4) being also adapted to prohibit the flow of said mixture to said misting device (25) if the read identification number does not match the identification number read previously.

10. Installation according to Claim 9, **characterised in that** at least said first pumping means (9), said mixing point (19), said second pumping means (16), said inviolable junction means (13), said tank (10), said control means (4) and/or said flow rate measuring means (18) are housed in a place (3) access to which is protected.

11. Installation according to either Claim 9 or Claim 10, **characterised in that** said control means (4) include telecommunication means (4b) for transmitting the data on the progress of misting to a remote place.
